# EUROPEAN PATENT APPLICATION

(11) **EP 4 744 746 A1**
(43) Date of publication of application: **20.05.2026**
(21) Application number: 25213308.7
(22) Date of filing: 04.11.2025
(51) Int. Cl.: A63F 9/30, A63H 17/26

(54) **OBJECT-CATCHING TOY**

(30) Priority: 14.11.2024 IT 202400025713
(71) Applicant: Clementoni S.P.A., 62019 Recanati (MC) (IT)
(72) Inventor: MARIANI, Daniele, 06128 PERUGIA (IT); PUGLIESE, Maria Elena, 62010 MONTELUPONE (MC) (IT)
(74) Representative: Baldi, Claudio

(57) **Abstract**

Object-catching toy (100) comprising two wheels (C) supported by the at least one arm (B) projecting from a body (A); each wheel (C) comprises a hard element (2) and a soft element (3); the hard element (2) comprises a hub (20) and a rim (21) having a peripheral collar (22); the soft element (3) comprises a plurality of lugs (31) projecting in parallel directions to the axis of rotation (X) of the wheels; the lugs (31) of a wheel face the lugs (31) of another wheel, in such a way to define a gap (I) communicating with a storage compartment (V).

## Description

The present invention relates to the field of children's toys and, in particular, to an object-catching toy comprising a toy vehicle suitable for catching brick-shaped blocks placed on the ground or on a flat surface whereon the vehicle travels.

An object-catching toy comprising a cart provided with a mechanism suitable for catching rigid bricks and pushing them into a storage compartment is available on the market. The mechanism comprises a sequence of soft rubber rings. Each ring has three extensions. The rings are assembled on a rigid axle connected to the pair of wheels of the cart. The bricks are moved in a sort of slide that ends into the storage compartment of the cart. The storage compartment is accessible through another opening that the child can use to retrieve the bricks. The cart can only move in the forward direction. If the cart is moved backward, the bricks are not caught, and the bricks contained inside the cart that are close to the soft rings are pushed out of the cart.

Such a type of object-catching toy is impaired by some drawbacks.

The catching mechanism is complicated and the toy comprises too many parts. In fact, such a mechanism comprises a sequence of rubber parts, and the toy comprises a slide system to transport the caught objects into the storage compartment and an opening to retrieve the objects from the storage compartment.

Furthermore, the catching mechanism is not very efficient or reliable because it sometimes gets jammed and does to catch the objects easily.

Furthermore, the toy works in one direction only and does not work when the cart is traveling in reverse gear.

CN208959305U discloses a toy car whose body houses an internal collection chamber and moves on at least one pair of moving wheels connected by a rotating shaft. The front part of the vehicle is provided with a collecting port that ends directly into the chamber and is provided with a spiral collection device that comprises a rotating shaft and a plurality of blades that are arranged helically around it. During the movement of the toy car, the rotation of the shaft causes the blades to convey into the chamber the objects that are encountered at the height of the port, thus allowing children to collect the scattered toys by simply moving the toy car forward.

The purpose of the present invention is to eliminate the drawbacks of the prior art by providing an object-catching toy that is simple to manufacture and made of a few parts.

Another purpose is to provide an object-catching toy that is efficient and reliable.

A further purpose is to provide such an object-catching toy that is versatile and suitable for being used in both traveling directions (forward and backward).

These purposes are achieved in accordance with the invention with the characteristics of the attached independent claim 1.

Advantageous embodiments of the invention appear from the dependent claims.

Further characteristics of the invention will become clearer from the following detailed description, which refers to a merely illustrative and therefore non-limiting embodiment, illustrated in the attached drawings, wherein:

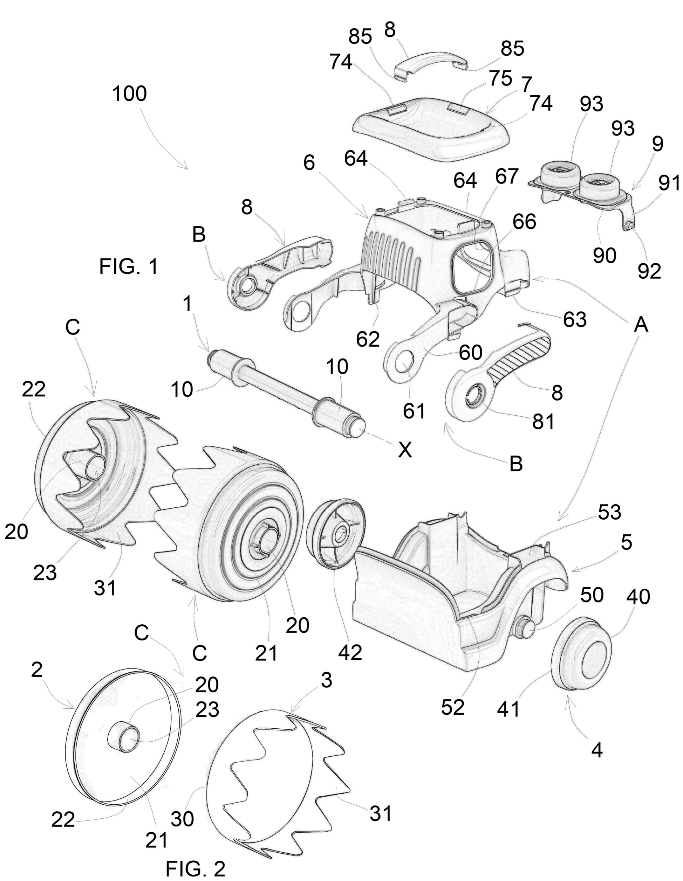

Fig. 1 is an exploded perspective rendering view illustrating the various parts of the object-catching toy according to the invention;
Fig. 2 is an exploded perspective view illustrating a front wheel of the object-catching toy of Fig. 1;
Fig. 3 is a perspective rendering view illustrating the object-catching toy of Fig. 1 in assembled condition;
Fig. 4 is a top view of the object-catching toy of Fig. 3;
Fig. 5 is a side view of the object-catching toy of Fig. 3;
Fig. 6 is a front view of the object-catching toy of Fig. 3; and

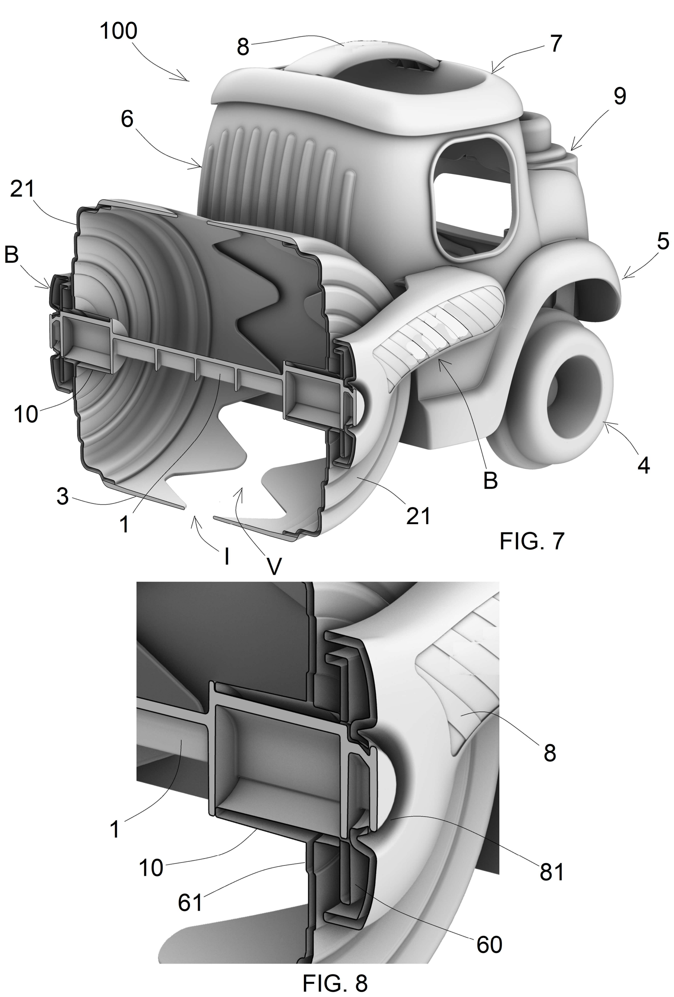

Fig. 7 is a cross-sectional view of the object-catching toy of Fig. 3, taken along the axis of the front wheels.

With the aid of the Figures, the object-catching toy according to the invention is described, which is comprehensively indicated with reference numeral 100.

The toy (100) comprises:
- a body (A),
- at least one arm (B) projecting anteriorly from the body (A), and
- two wheels (C) supported by the at least one arm (B) in such a way to roll on a surface around an axis of rotation (X).

Each wheel (C) comprises a hard element (2) and an elastically flexible soft element (3).

The hard element (2) of the wheel comprises:
- a hub (20), and
- a rim (21) having a peripheral collar (22).

The soft element (3) comprises:
- an annular edge (30) attached to the peripheral collar (22) of the rim,
   and
- a plurality of lugs (31) projecting from the annular edge (30) of the soft element in parallel directions to the axis of rotation (X) of the wheels.

By way of example, the soft element (3) may have the shape of an annulus with a plurality of lugs (31) in the shape of saw teeth with a triangular profile.

The lugs (31) may have other types of profile, such as a rectangular, trapezoidal, sinusoidal, and similar profile. The important thing is that the lugs (31) must be capable of being elastically bent inwards, i.e., towards the axis of rotation (X) of the wheel, and of elastically returning to the original position, i.e., parallel to the axis of rotation of the wheel. For such a purpose, the lugs (31) may have a thickness of approximately 3-8 mm.

The lugs (31) of a wheel face the lugs (31) of another wheel in such a way to define a gap (I) between the lugs (31) of two wheels.

The lugs (31) of the two wheels may be symmetrical with respect to a plane orthogonal to the axis of the wheels located in the center of the gap (I), i.e., the lugs (31) of a wheel are positioned in front of the lugs (31) of another wheel.

Alternatively, the lugs (31) of the two wheels may be staggered, i.e., the lugs (31) of a wheel are positioned in front of the inlet formed between the lugs (31) of another wheel. The gap (I) between the lugs (31) of two wheels communicates with a storage compartment (V) defined between the two wheels (C). Otherwise said, the rim (21) and the soft element (3) of a wheel define a first storage semi-compartment, and the rim (21) and the soft element (3) of the other wheel define a second storage semi-compartment, and the two storage semi-compartments define the storage compartment (V).

In view of the above, when the two wheels (C) pass over an object that is situated in correspondence with the gap (I) formed between the lugs (31) of the two wheels, the lugs (31) are elastically bent inwards, causing the object to enter the storage compartment (V); successively, the lugs (31) are elastically snapped and return to the original position parallel to the axis of rotation (X) of the wheels, thus retaining the object in the storage compartment (V).

It should be noted that the objects are caught both when the wheels (C) roll in forward direction relative to the body (A) and when the wheels (C) roll in backward direction relative to the body (A) on the surface where the objects are situated. In fact, in both cases, the lugs (31) are elastically bent when they encounter the object.

Obviously, the object to be caught must have a larger size than the gap (I) formed between the projections, otherwise the object would come out of the storage compartment (V) through the gap (I). Therefore, the gap (I) is designed according to the size of the objects to be caught.

For illustrative purposes, the objects to be caught may be parallelepiped-shaped bricks with a length of 4-5 cm, a width of 2-3 cm, and a thickness of 0.4-0.6 cm.

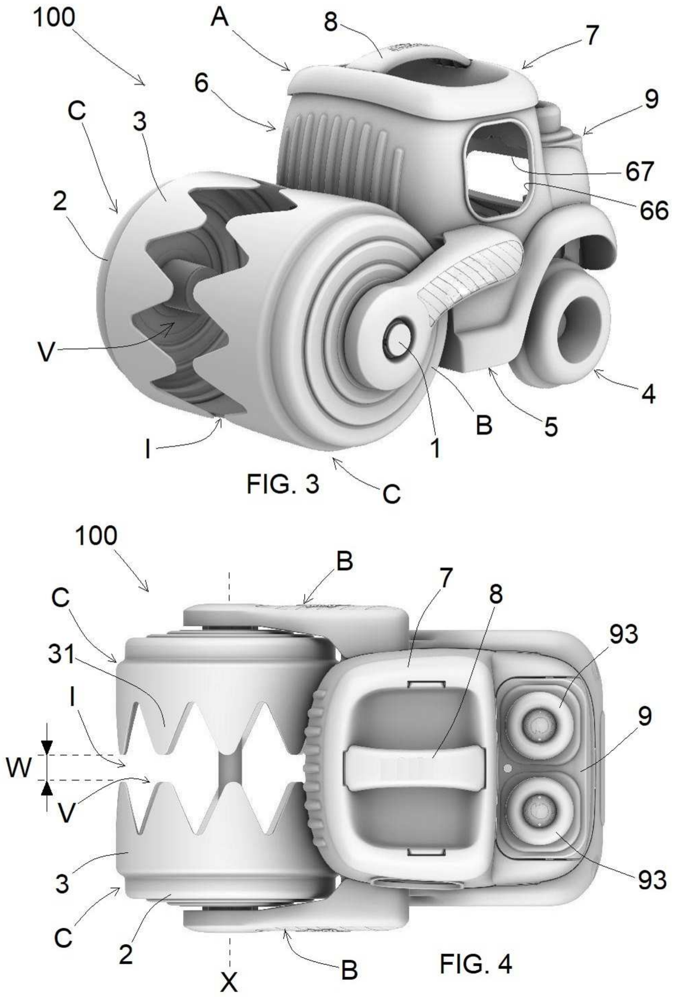

By way of example, with reference to Fig. 4, the gap (I) may have a minimum width (W) (given by the distance between the tips of the lugs (31) comprised in the range of 1-3 cm.

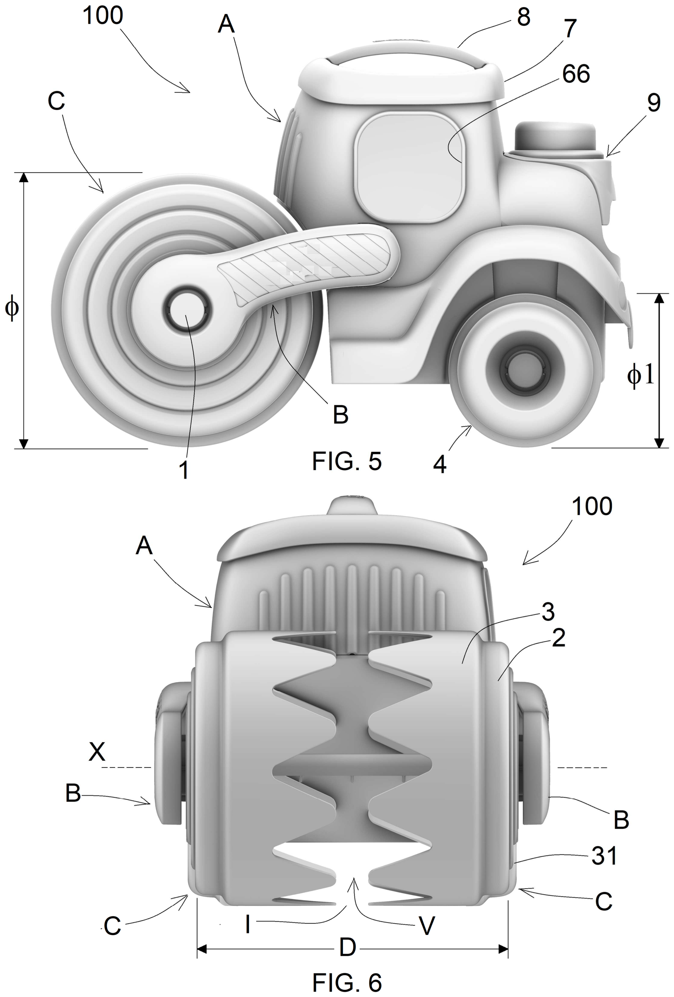

The rim (21) of each wheel has a diameter (ϕ) (Fig. 5). The rims (21) of the two wheels are arranged at a distance (D) from each other (Fig. 6). The diameter (ϕ) of the rim (21) and the distance (D) between the rims of the two wheels are selected according to the number of objects to be caught.

For illustrative purposes, the diameter (ϕ) of the rim (21) is 12-16 cm and the distance (D) between the rims of the two wheels is 16-22 cm. In this way, the storage compartment (V) has a cylindrical volume of approximately 1.8-4.4 dm³. Such a volume of the storage compartment (V) is sufficient to contain more than ten objects.

In order to retrieve the objects from the storage compartment, the user simply needs to introduce his/her hand inside the gap (I), bending the lugs (31) inwards in such a way to grab an object in the storage compartment (V). Successively, the user can extract the grabbed object because the lugs (31) are bent outwards.

Each wheel (C) can be made using a co-molding technique, wherein the soft element (3) is co-molded with the hard element (2). Otherwise said, the hard element (2) is made in a first mold by means of injection molding of a hard plastic material, such as polypropylene (PP).

Successively, the hard element (2) is placed in a second mold wherein a soft plastic material, such as a thermoplastic elastomer, for example a thermoplastic rubber (TPR), is injected to co-mold the soft element (3) with the hard element (2).

Advantageously, the soft element (3) can be made of a thermoplastic starch (TPS) rubber, having a hardness of less than 45 Shore A.

In the embodiment of the invention illustrated in the Figures, the toy (100) comprises a shaft (1) rotatably mounted on two arms (B). In such a case, the wheels (C) are fixedly mounted on the shaft (1). The shaft (1) has two shanks (10) arranged at its ends which are press-fitted into holes (23) of the hubs (20) of the wheels.

However, the shaft (1) could be fixedly mounted on two arms or only on one arm (B) located centrally in the body (A). In such a case, the wheels (C) are rotatably mounted on the shaft (1).

Alternatively, the shaft (1) could be omitted. In such a case, the two wheels (C) can be rotatably mounted directly on the two arms (B).

The body (A) comprises:
- a lower cabin (5),
- an upper cabin (6) mounted on the lower cabin (6), and
- a roof (7) mounted on the upper cabin (6).

The toy may comprise two rear wheels (4) rotatably mounted in the body (A) to roll on the ground. In such a case, the wheels (C) are the front wheels.

The rear wheels (4) have a lower diameter (ϕ1) than the diameter (ϕ) of the wheels (C). For illustrative purposes, the ratio between the diameter (ϕ) of the wheels (C) and the diameter (ϕ1) of the rear wheels (4) is approximately 1.5-3.

Each rear wheel (4) has a rim (40) made of a hard material and an edge (41) made of a soft material for rolling on the ground. The rear wheel (4) is obtained by co-molding, just like the wheel (C).

The lower cabin (5) has the shape of a box open at the top with pins (50) that project laterally outwards in opposite directions. Each rear wheel (4) has a hub (42) suitable for rotatably engaging a respective pin (50) of the lower cabin.

The upper cabin (6) is box-shaped with two forward-projecting brackets (60). Each arm (B) comprises a bracket (60) of the upper cabin and a casing (8) covering the bracket (60). The bracket (60) and the casing (80) have respective holes (61, 81) wherein the shaft (1) is rotatably engaged.

The upper cabin (6) has lower lugs (62, 63) that project downward to engage in seats (52, 53) formed in the lower cabin, in fit-in coupling mode. In such a way, a second storage compartment for the bricks is formed between the lower cabin (5) and the upper cabin (6).

The upper cabin (6) has upper lugs (74) that project upward to engage in seats (74) formed in the roof (7) in fit-in coupling mode.

The toy (100) further comprises a handle (8) provided with two lugs (85) for engaging in seats (75) formed in the roof (7) in fit-in coupling mode.

The toy comprises a rear element (9) in the shape of a bridge with a platform (90) supported by two legs (91) having pins (92) that engage in the upper cabin (6) behind a rear window (67) of the upper cabin. Two rings (93) made of soft material are disposed on the platform (90).

The bricks can be introduced into the second compartment formed by the lower cabin (5) and by the upper cabin (6) through the rear element (9), passing through the rear window (67) or through a lateral hole (66) made in one side of the upper cabin (6).

The rear element (9) is used to retrieve the bricks from the second compartment formed by the lower cabin (5) and by the upper cabin (6).

The rear element (9) is made by co-molding, molding the soft material of the rings (93) onto the hard material of the platform (90).

The toy (100) according to the invention has the following advantages:
- the catching mechanism is very simple as it comprises only the two wheels (C);
- the catching mechanism is efficient and can easily catch various types of objects;
- the caught objects are stored directly in the storage compartment (V) between the two wheels, without the need for using a complicated sliding system;
- the caught objects can be retrieved directly from the storage compartment (V) between the two wheels, without having to access optional openings; and
- the toy can be used bidirectionally as it catches objects in both directions of rotation of the two wheels (C).

Numerous modifications can be made to the present embodiment of the invention, which are within the reach of an expert of the field and fall in any case within the scope of the invention as disclosed by the attached claims.

## Claims

1. Object-catching toy (100) comprising:
- a body (A),
- at least one arm (B) projecting anteriorly from the body (A), and
- two wheels (C) supported by the at least one arm (B) in such a way to roll on a surface around an axis of rotation (X);
**characterized in that** each wheel (C) comprises a hard element (2) and an elastically flexible soft element (3);
the hard element (2) of the wheel comprises:
- a hub (20), and
- a rim (21) having a peripheral collar (22);
the soft element (3) of the wheel comprises:
- an annular edge (30) attached to the peripheral collar (22) of the rim, and
- a plurality of lugs (31) projecting from the annular edge (30) of the soft element in parallel directions to the axis of rotation (X) of the wheels;
the lugs (31) of a wheel face the lugs (31) of another wheel, in such a way to define a gap (I) between the lugs (31) of two wheels in communication with a storage compartment (V) defined between the two wheels (C), in such a way that, when the two wheels (C) pass over an object that is situated in correspondence with the gap (I) formed between the lugs (31) of the two wheels, the lugs (31) are elastically bent inwards, causing the object to enter the storage compartment (V); successively, the lugs (31) are elastically snapped and return to the original position parallel to the axis of rotation (X) of the wheels, thus retaining the object in the storage compartment (V).

2. The toy (100) according to claim 1, wherein the lugs (31) of the two wheels are symmetrical with respect to a plane orthogonal to the axis of the wheels located in the center of the gap (I), i.e. the lugs (31) of a wheel are positioned in front of the lugs (31) of another wheel.

3. The toy (100) according to claim 1, wherein the lugs (31) of the two wheels are staggered, i.e. the lugs (31) of a wheel are positioned in front of an inlet formed between the lugs (31) of another wheel.

4. The toy (100) according to any of the preceding claims, wherein the soft element (3) is in the shape of an annulus with a plurality of lugs (31) in the shape of saw teeth.

5. The toy (100) according to claim 4, wherein the lugs (31) are in the shape of saw teeth with a triangular profile.

6. The toy (100) according to any of the preceding claims, wherein the lugs (31) have a thickness of 3-8 mm.

7. The toy (100) according to any of the preceding claims, wherein said gap (I) has a minimum width (W) comprised in the range between 1 cm and 3 cm.

8. The toy (100) according to any of the preceding claims, wherein the rim (21) of each wheel has a diameter (ϕ) of 12-16 cm and the distance (D) between the rims (21) of the two wheels is 16-22 cm.

9. The toy (100) according to any of the preceding claims, wherein the soft element (3) is co-molded with the hard element (2) so as to obtain said wheel (C).

10. The toy (100) according to any of the preceding claims, wherein the soft element (3) is a thermoplastic starch (TPS) rubber.

11. The toy (100) according to any of the preceding claims, comprising a shaft (1) rotatably mounted on two arms (B) projecting from the body (A), wherein said wheels (C) are fixedly mounted on the shaft (1).

12. The toy (100) according to any of claims 1 to 10, wherein said wheels (C) are rotatably mounted in two arms (B) projecting from the body (A).

13. The toy (100) according to any of claims 1 to 8, wherein said wheels (C) are rotatably mounted in a shaft (1) fixedly supported by one or two arms (B) projecting from the body (A).

14. The toy (100) according to any of the preceding claims, comprising two rear wheels (4) rotatably mounted in the body (A).
